# NEW EUROPEAN PATENT SPECIFICATION

(11) **EP 0 462 838 B2**
(45) Date of publication and mention of the opposition decision: **18.09.1996**
(45) Mention of the grant of the patent: 15.12.1993
(21) Application number: 91305604.0
(22) Date of filing: 20.06.1991
(51) Int. Cl.: A23L 1/22, A23D 7/00

(54) **Flavour oil and process for producing the same**
Aroma-Oel und Verfahren zu seiner Herstellung
Huile aromatisée et procédé pour sa production

(30) Priority: 21.06.1990 JP 164986/90
(43) Date of publication of application: 27.12.1991
(73) Proprietor: FUJI OIL COMPANY, LIMITED, Osaka-shi, Osaka-fu 542 (JP)
(72) Inventor: Yokomizo, Futoshi, Izumisano-shi, Osaka-fu (JP); Miyabe, Masaaki, Sennan-gun, Osaka-fu (JP); Tashiro, Yoichi, Moriya-machi Kitasoma-gun, Ibaraki-ken (JP); Furukawa, Masahiro, Sennan-gun, Osaka-fu (JP)
(74) Representative: Baverstock, Michael George Douglas

(56) References cited:
- GB-A- 2 163 445
- JP-A- 0 171 440
- PATENT ABSTRACTS OF JAPAN vol. 13, no. 372 (C-627)(3720), 17 August 1989; & JP - A - 1128745 (FUJI OIL CO. LTD.) 22.05.1989
- PATENT ABSTRACTS OF JAPAN vol. 9, no. 134 (C-285)(1857), 8 June 1985; & JP - A - 6019449 (SHIYUUZOU NAKAZONO) 31.01.1985
- PATENT ABSTRACTS OF JAPAN vol. 11, no. 184 (C-427)(2631), 12 June 1987; & JP - A - 626651 (MEIJI SEIKA KAISHA LTD.) 13.01.1987

## Description

The present invention relates to a process for producing a flavour oil and to a flavour oil produced by said process. More particularly, it relates to a flavour oil which has been made by the process and has a good body providing the base taste for fats and oils. The flavour oil of the present invention can be used widely and is not limited to an edible fat or oil having a specific taste.

In general, edible fats and oils purified by conventional methods are almost tasteless and odourless in comparison with special fats and oils such as sesame oil, olive oil, cacao butter and the like. An oil produced by flavouring or seasoning such a purified edible fat or oil has been known and it is referred to as a "flavour oil" or "seasoning oil". For producing such a flavour oil or seasoning oil, various methods have been proposed. For example, a method has been proposed for producing a flavour oil having the characteristic flavour of Chinese dishes such as pan-fry or deep-fry dishes which comprise adding fennel, Welsh onion and garlic to a fat or oil heated with flames having strong caloric force so as to extract their essence sufficiently, then lowering the temperature, adding pepper to the mixture to further extract the essence and then filtering off the oil (Japanese Patent Kokoku No. 57-58901). A method has been proposed for producing flavour oils having various flavours which comprises cutting or grinding vegetables having a water content of 60% or higher, such as cabbage, lettuce, ginger, garlic, Welsh onion and the like, for example, into pieces of less than 2 mm in thickness, adding the vegetables to a fat or oil, maintaining the mixture at 110 to 160°C and then collecting the oil phase (Japanese Patent Kokoku No. 59-4972). A method has been proposed for producing a seasoning oil for various dishes such as steak, sukiyaki, sauteed vegetables, Chinese noodles, Chinese-style hotchpotch, gratin, soup and the like which comprises dipping raw materials to be treated such as vegetables into a heated oil in a cooker to conduct a heat treatment and, at the same time as the heating, subjecting the mixture to a treatment at reduced pressure under constant conditions so as to dissolve their essence, flavours and other ingredients in the oil, and then taking out the oil from the cooker (Japanese Patent Kokai No. 60-19449). A method has been proposed for producing flavour oils having various flavours which comprises subjecting an admixture of a fat or oil with raw materials such as vegetables, meat, fowl, fishery products, seaweeds, spices, beans, processed products thereof or mixtures thereof with a flavouring material such as a brewed product, to heat treatment under normal pressure, and then subjecting the resultant treated admixture to a heat treatment under pressure (Japanese Patent Kokai No. 62-6651).

JP-A-1128745 describes a method of producing a seasoning oil comprising mixing fat and oil with sugars and/or a material containing skimmed milk solid component. However, the sugar/skimmed milk component is not heated before addition to the oil.

Any of these conventional methods for producing a flavour oil or seasoning oil utilize flavour components possessed by the flavouring materials such as flavour, smell and the like and, although the flavour oils themselves are good products, they have their own peculiar flavours and, therefore, there is a disadvantage in that their uses are limited.

On the other hand, apart from a flavour oil or seasoning oil, although edible fats and oils purified by conventional methods are almost tasteless and odourless as described above, in fact, they have their own peculiar oily flavour. For example, in general, a liquid oil has a peculiar fatty flavour and palm oil has a peculiar powdery flavour. Therefore, there is a disadvantage in that they have such an oily flavour which is unpleasant and this unpleasant oily flavour increases with time.

Further, examples of oils normally used for frying include soybean oil, rapeseed oil, palm oil, palm soft oil and the like. However, these oils contain a large amount of unsaturated acids as the constituent fatty acids and, therefore, peroxides, carbonyl compounds and the like are formed during frying and so there is a problem of thermal oxidation stability. To solve this problem hardening of these oils can, for example, normally be employed to improve the thermal oxidation stability and storage oxidation stability. However, when these hardened oils (hydrogenated oils) are used for frying, there is a disadvantage in that a peculiar smell is formed by the hardening. Therefore, such hardened oils are not preferred for frying in view of flavour.

The present invention solves the disadvantages described above, namely, the limitation of the uses of conventional flavour oils and seasoning oils due to their peculiar flavour, the unpleasant oily flavour of edible fats and oils, the peculiar smell of hardened oils, and the increase in hardening smell with time.

The present invention further increases the production of fats and oils having good body derived from milk in view of usefulness of resources of milk fat.

The present invention provides a process for producing a flavour oil which comprising adding to a fat or oil a product which has been derived by heat treating at a temperature in the range 70° to 120°C a mixture of sugar and a dairy product powder, subjecting the resultant to a heat treatment at a temperature of 90 to 150°C under reduced pressure of not higher than 60mmHg, and then removing solids to obtain an oil-soluble component. The process may include the further step of mixing 0.01 to 20% by weight of the oil-soluble component with another fat or oil.

The invention includes a flavour oil comprising the oil-soluble component produced as described above in an amount of 0.01 to 20% by weight together with another fat or oil.

The sugar-heat treated dairy product powder used in the present invention is described in detail in the applicant's Japanese Patent Application No. 62-226973. Examples of the dairy product powder to be treated include whole milk powder, skimmed milk powder, sugared milk powder, modified whole milk powdered, modified skimmed milk powder product and the like. Examples of the reducing sugar include glucose, fructose, galactose, xylose, maltose and the like.

The mixing ratio of the reducing sugar is 1 to 20 parts by weight based on the 100 parts by weight of the dairy product powder. When the mixing ratio of the reducing sugar is lower than the above lower limit, the desired effect is scarcely expected. When it exceeds the above upper limit, excess sweetness of the reducing sugar is present and, at the same time, viscosity is increased, which results in deterioration of workability, and it is not preferred.

Upon the heat treatment, the amount of water in the mixture of the dairy product powder and the reducing sugar is adjusted to 1 to 15% by weight. When the water content is lower than the above lower limit, the desired effect is scarcely expected. When the water content exceeds the above upper limit, the mixture may form a paste and so viscosity is increased, which results in deterioration of workability and, further, it takes more time than is necessary. Further, in normal conditions, the above-described dairy product powder will contain water in an amount up to about 5% by weight and, therefore, in some cases, water may not need to be added.

The heating temperature may be about 70 to 120°C. For low temperatures within this range, the desired effect can be obtained by treating for a longer period of time (e.g. for about 10 hours at 70°C) while for high temperatures in this range, the desired effect can be obtained by treating for a shorter period of time (e.g. for about 10 minutes at 120°C). The degree of intensity of flavour can be adjusted according to the degree of treatment. When the temperature is lower than the above lower limit, production efficiency becomes inferior. When the temperature exceeds the above upper limit, good flavour can hardly be formed.

The heating apparatus may, for example, be an internal heating and mixing apparatus equipped with a mixing blade and a vacuum device (e.g., vacuum kneader). By using such an apparatus, a mixture of the diary product powder, the reducing sugar and the like is subjected to heat treatment with mixing.

Further, when a small amount of water is added to the dairy product powder, the resulting treated material is liable to become lumpy. In order to prevent this, it is preferred that sugar or powdered sugar is added within an acceptable range. It is effective to add sugar or powdered sugar in an amount of 5 to 50 parts by weight based on 100 parts by weight of the dairy product powder, preferably 1 to 20 parts by weight. Further, when the fat content of the dairy product powder is lower, for example, in the case of treating skimmed milk powder, a suitable amount (the amount calculated as whole milk powder) of a vegetable fat or oil can be added to increase the heat transfer coefficient upon reaction as well as to reduce lumps remaining in the treated material.

When the heat treatment is completed, water is removed under reduced pressure, followed by cooling. Lumps are present in this cooled material and, therefore, it is appropriately pulverized by a pulverizer.

The sugar-heat treated dairy product powder prepared in this way has a characteristic caramel-like flavour which is completely different from an untreated milk powder. By subjecting the milk powder to the sugar-heat treatment as described above, good characteristics are produced. On the contrary, if milk powder which is not subjected to the sugar-heat treatment is used for flavouring, the resulting flavour is weak, and it is not preferred.

According to the present invention, the dairy product powder subjected to the sugar-heat treatment as described above can itself be used as the flavour oil of the invention in which case it is diluted with a fat or oil upon use. Alternatively, it can be added to a fat or oil in an amount of 0.01 to 20% by weight to obtain the flavour oil of the present invention. In many cases, when the dairy product powder subjected to the sugar-heat treatment is added to a fat or oil in an amount of 0.1% by weight or more, the desired result can be obtained. For enhancing the flavour, in general, the dairy product powder is added to a fat or oil in an amount of 2% by weight or more. The dairy product powder can be added in an amount of 10% by weight or more to produce concentrated flavour, and then, it can be diluted with a normal fat or oil upon use.

Thus, a fat or oil to which the dairy product powder subjected to the sugar-heat treatment as described above is added is mixed with heating under reduced pressure. Regarding the conditions of pressure reduction, it is necessary that the pressure of vacuum, is not higher than 60 mmHg (60 Torr). When the degree of vacuum exceeds 60 mmHg, oxidation stability is liable to become inferior. Further, it is necessary that the heating temperature is 90 to 150°C. When the temperature is lower than the above lower limit, the desired effect is scarcely obtained and, when the temperature exceeds the above upper limit, a burned smell may be formed. The heating time is not specifically limited, it may be for example about 2 hours, but the period of time scarcely influences the above treatment.

Then, the material thus treated is cooled and separated into an oil and solids by conventional separation means such as filtration, centrifugation, decantation or the like to give a flavour oil.

Examples of the fat or oil used in the present invention which is flavoured by the dairy product powder subjected to the sugar-heat treatment include vegetable fats and oils such as rapeseed oil, soybean oil, sunflowerseed oil, cotton seed oil, peanut oil, corn oil, safflower oil, kapok oil, evening primrose oil, palm oil, shea fat, sal fat, coconut oil, palm kernel oil and the like and animal fats and oils such as beef tallow, lard, fish oil, whale oil and the like. These fats and oils may be used alone or in combinations thereof. Processed fats and oils or synthesized fats and oils which are subjected to hardening, fractionation, interesterification and the like, may also be used as well as a wide range of fats and oils from liquid oils to fats and oils having high melting points. These fats and oils are preferably purified fats and oils. Particularly, palm oil, palm olein, hydrogenated soybean oil or hydrogenated rape seed oil are preferred and the flavour oils produced using these fats or oils have good body which is similar to that of milk fat and, at the same time, have excellent oxidation stability in comparison with milk fat.

As described above, the flavour oil obtained according to the present invention is not limited to a special oil and shows good body as the base of flavour of fats and oils per se. Further, it can be widely used. For example, it can be used as fats and oils which are suitable for various uses in various foods such as frying, spraying, margarine, shortening, kneading, cream and the like.

Thus, according to the present invention, it has become possible to apply good body to fats and oils such as liquid oil which have been considered to be oily and palm oil, and it has also become possible to mask the hardening smell of hardened oils.

The following Examples and Comparative Examples further illustrate the present invention in detail In the Examples and Comparative Examples, all "parts" and "percents" are by weight unless otherwise stated.

### Example 1

Water (5 parts) was added to a mixture of whole milk powder (90 parts) and glucose (5 parts) and the mixture was subjected to a heat treatment with mixing at 100°C for one hour, dehydrated under reduced pressure and cooled to obtain a crude powder material. Then, the crude powder material was pulverized to obtain a sugar-heat treated dairy product powder having an average particle size of 0.5 mm. This sugar-heat treated dairy product powder (1 part) was mixed with purified hardened palm oil (20 parts) (ascending melting point: 30°C) and the mixture was mixed with heating at 90°C for 2 hours under vacuum of about 60 mmHg, cooled to about 60°C and separated into an oil and solids to obtain the desired flavour oil.

Doughnuts were fried using this flavour oil and purified hardened palm oil and the taste and flavour thereof were tested organoleptically by 20 panelists. As a result, 20 panelists pointed out that the flavour oil was very good thus supporting that the flavour oil obtained in this example was extremely superior.

### Comparative Example 1

According to the same manner as that described in Example 1, an oil product was obtained except that whole milk powder (1 part) was mixed with purified hardened palm oil (20 parts). Doughnuts fried using this treated oil were lacking in aroma.

### Comparative Example 2

According to the same manner as that described in Example 1, an oil product was obtained except that the mixing with purified hardened palm oil was conducted at 70°C. As a result, the intensity of flavour was weak in comparison with the product of Example 1.

### Comparative Example 3

According to the same manner as that described in Example 1, an oil product was obtained except that the mixing with purified hardened palm oil was conducted at 160°C. As the result, a burned smell was present in the product.

### Example 2

To a mixture of whole milk powder (70 parts), granulated sugar powder (25 parts) and glucose (5 parts) was added water (5 parts) and the mixture was subjected to heat treatment with mixing at 95°C for 80 minutes, dehydrated under reduced pressure and cooled to obtain a crude powder material. In comparison with Example 1, the particle size of this crude powder article was smaller. Then, the crude powder material was pulverized to obtain a sugar-heat treated dairy product having an average particle size of 0.5 mm.

This sugar-heat treated dairy product powder (1 part) was mixed with purified hardened rape seed oil (20 parts) (ascending melting point: 35°C) and the mixture was mixed with heating at 120°C for 90 minutes under vacuum of about 5 mmHg, cooled to 60°C and separated into an oil and solids to obtain the desired flavour oil.

Candies were produced by using this flavour oil and purified hardened rape seed oil and the taste and flavour thereof were tested organoleptically by 20 panelists. As a result, 17 panelists pointed out that the flavour oil was superior, 2 panelists pointed out that purified hardened rape seed oil was superior and 1 panelist pointed out that both were not superior. These results supported that the flavour oil obtained in this example was extremely superoir.

## Claims

1. A process for producing a flavour oil comprising adding to a fat or oil a product which has been derived by heat treating at a temperature in the range 70°C to 120°C a mixture of sugar and a dairy product powder, subjecting the resultant to a heat treatment at a temperature of 90 to 150°C under reduced pressure of not higher than 60mmHg, and then removing solids to obtain an oil-soluble component.

2. A process for producing a flavour oil comprising subjecting a mixture of 1 to 20 parts by weight of a reducing sugar with 100 parts by weight of a dairy product powder to a heat treatment at a temperature in the range of 70° to 120°C in the presence of 1 to 15% by weight of water, adding the product obtained therefrom to a fat or oil, subjecting the resultant to a heat treatment at a temperature of 90 to 150°C under reduced pressure of not higher than 60mmHg, and then removing solids to obtain an oil-soluble component.

3. A process for producing a flavour oil as claimed in claim 2 or claim 3 characterised in that the sugar comprises glucose, fructose, galactose, xylose, maltose or a mixture of two or more thereof.

4. A process for producing a flavour oil as claimed in any one of claims 2 to 4 characterised in that the dairy product powder comprises whole milk powder, skimmed milk powder, sugared powder milk, modified whole milk powder, modified skimmed milk powder, or a mixture of two or more thereof.

5. A process as claimed in any one of claims 2 to 5 which includes the further step of mixing 0.01 to 20% by weight of the oil-soluble component with another fat or oil.

6. A flavour oil comprising an oil-soluble component produced by the process of any one of claims 2 to 5 in an amount of 0.01 to 20% by weight together with another fat or oil.

## Patentansprüche

1. Verfahren zur Herstellung eines Geschmacksöls, wobei man einem Fett oder einem Öl ein Produkt zufügt, das abgeleitet worden ist, indem man eine Hitzebehandlung bei einer Temperatur im Bereich von 70 bis 120°C einer Mischung eines Zuckers und eines Molkereiproduktpulvers durchführt, das entstandene Produkt einer Hitzebehandlung bei einer Temperatur von 90 bis 150°C unter vermindertem Druck von nicht höher als 60 mm Hg unterzieht und dann die Feststoffe entfernt, um eine öllösliche Komponente zu erhalten.

2. Verfahren zur Herstellung eines Geschmacksöls, wobei man eine Mischung von 1 bis 20 Gew.Teilen eines reduzierenden Zuckers mit 100 Gewichtsteilen eines Molkereiproduktpulvers einer Hitzebehandlung bei einer Temperatur im Bereich von 70 bis 120°C in der Gegenwart von 1 bis 15 Gew.% Wasser unterzieht, das daraus erhaltene Produkt einem Fett oder Öl zufügt, das entstandene Produkt einer Hitzebehandlung bei einer Temperatur von 90 bis 150°C unter vermindertem Druck von nicht höher als 60 mm Hg unterzieht und dann die Feststoffe beseitigt, um eine öllösliche Komponente zu erhalten.

3. Verfahren zur Herstellung eines Geschmacksöls gemäß Anspruch 1 oder 2,
dadurch **gekennzeichnet**, daß
der Zucker Glucose, Fructose, Galactose, Xylose, Maltose oder eine Mischung von zwei oder mehreren davon umfaßt.

4. Verfahren zur Herstellung eines Geschmacksöls gemäß jedem Anspruch 1 bis 3,
dadurch **gekennzeichnet**, daß
das Milchproduktpulver Gesamtmilchpulver, entrahmtes Milchpulver, gezuckertes Milchpulver, modifiziertes Gesamtmilchpulver, modifiziertes entrahmtes Milchpulver oder eine Mischung von zwei oder mehreren davon umfaßt.

5. Verfahren gemäß jedem Anspruch 1 bis 4,
worin die weitere Stufe eingeschlossen ist, in welcher man 0,01 bis 20 Gew.% der öllöslichen Komponente mit einem weiteren Fett oder Öl vermischt.

6. Geschmacksöl, enthaltend eine öllösliche Komponente, hergestellt durch das Verfahren gemäß jedem der Ansprüche 1 bis 5, in einer Menge von 0,01 bis 20 Gew.% zusammen mit einem weiteren Fett oder Öl.

## Revendications

1. Procédé de production d'une huile aromatisante, caractérisé en ce que l'on ajoute à une graisse ou une huile un produit qui a été obtenu par le traitement thermique, à une température qui fluctue de 70°C à 120°C, d'un mélange de sucre et d'une poudre de produit laitier, on soumet le produit ainsi obtenu à un traitement thermique à une température de 90 à 150°C sous pression réduite non supérieure à 60 mm de Hg et on élimine ensuite les solides pour obtenir un composant oléosoluble.

2. Procédé de production d'une huile aromatisante, caractérisé en ce que l'on soumet un mélange de 1 à 20 parties en poids d'un sucre réducteur et de 100 parties en poids d'une poudre de produit laitier à un traitement thermique, à une température qui varie de 70°C à 120°C, en présence de 1 à 15% en poids d'eau, on ajoute le produit obtenu de cette manière à une graisse ou une huile, on soumet le produit résultant à un traitement thermique, à une température de 90 à 150°C, sous pression réduite non supérieure à 60 mm de Hg et on élimine les solides pour obtenir un composant oléosoluble.

3. Procédé de production d'une huile aromatisante suivant la revendication 2 ou la revendication 3, caractérisé en ce que le sucre est constitué de glucose, fructose, galactose, xylose maltose, ou d'un mélange de deux ou de plus de deux de ces sucres.

4. Procédé de production d'une huile aromatisante suivant l'une quelconque des revendications 2 à 4, caractérisé en ce que la poudre de produit laitier est constituée de poudre de lait entier, de poudre de lait écrémé, de poudre de lait sucré, de poudre de lait entier modifié, de poudre de lait écrémé modifié, ou d'un mélange de deux ou de plus de deux de ces produits.

5. Procédé suivant l'une quelconque des revendications 2 à 5, caractérisé en ce qu'il comprend l'étape supplémentaire de mélange de 0,01 à 20% en poids du composant oléosoluble à une autre graisse ou huile.

6. Huile aromatisante, caractérisée en ce qu'elle comprend un composant oléosoluble produit par mise en oeuvre du procédé suivant l'une quelconque des revendications 2 à 5, en une proportion de 0,01 à 20% en poids, en même temps qu'une autre graisse ou huile.
